# EUROPEAN PATENT APPLICATION

(11) **EP 4 300 401 A1**
(43) Date of publication of application: **03.01.2024**
(21) Application number: 22759144.3
(22) Date of filing: 13.01.2022
(51) Int. Cl.: G06Q 30/06

(54) **ORDER MANAGEMENT DEVICE, PROGRAM RECORDING MEDIUM, AND ORDER PROCESSING SYSTEM**

(30) Priority: 25.02.2021 JP 2021028804
(71) Applicant: Toshiba TEC Kabushiki Kaisha, Tokyo 141-8562 (JP)
(72) Inventor: SHINJOH, Seiji, Tokyo 141-8562 (JP); SAWA, Hiroshi, Tokyo 141-8562 (JP); SAITO, Yu, Tokyo 141-8562 (JP); NAKANISHI, Atsushi, Tokyo 141-8562 (JP); FUKUDA, Masashi, Tokyo 141-8562 (JP)
(74) Representative: Bandpay & Greuter
(86) International application number: PCT/JP2022/000969
(87) International publication number: WO 2022/181101

(57) **Abstract**

The order management apparatus includes units for acquisition, management, extraction, generation, and transmission. The acquisition unit acquires, from the order reception system, first order reception data containing a plurality of items of data relating to an order for a product. The extraction unit extracts a data element relating to a predetermined item from among data elements included in the first order reception data acquired by the acquisition unit. The generation unit generates second order reception data including the data element extracted by the extraction unit. If the first order reception data acquired by the acquisition unit includes timing information that designates a future time point as the provision timing of the product, the transmission unit waits until a time point determined according to the provision timing indicated by the timing information, and transmits the second order reception data generated by the generation unit to the shop system.

## Description

### FIELD

Embodiments described herein relate generally to an order management apparatus, a program storage medium, and an order processing system.

### BACKGROUND

Various online services (hereinafter, referred to as "order reception proxy services"), for example food delivery services, for receiving orders relating to provision of items such as food and beverages at restaurants or other shops are currently available.

Some of the order reception proxy services allow an ordering person to specify the timing of providing a product that he/she wants. In response to the receipt of such an order, the order reception proxy services notify the shop of the reception of the order even if the order includes designation of a future time point as a provision timing, and therefore it is the shop side that needs to manage the provision of the product at the designated provision timing.

Under such circumstances, a reduction in the burden on shops in regard to orders that have a future time point designated as a provision timing has been desired.

### CITATION LIST

### PATENT LITERATURE

Patent Literature 1: Jpn. Pat. Appln. KOKAI Publication No. 2020-201804

### SUMMARY

An object of the present invention is to provide an order management apparatus, an information processing program, and an order processing system that can reduce a burden on the shop side, in regard to an order with designation of a future time point as a provision timing.

### BRIEF DESCRIPTION OF THE DRAWINGS

FIG. 1 is a diagram showing a schematic configuration of an order processing system according to an embodiment.
FIG. 2 is a block diagram showing the essential circuitry configuration of the order management server in FIG. 1.
FIG. 3 is a diagram schematically showing a data structure of management data stored in an order reception data region in FIG. 2.
FIG. 4 is a block diagram showing the essential circuitry configuration of the order reception server in FIG. 1.
FIG. 5 is a block diagram showing the essential circuitry configuration of the shop station shown in FIG. 1.
FIG. 6 is a diagram schematically showing the configuration of order management data DAB stored in the order data region in FIG. 5.
FIG. 7 is a flowchart of information processing executed by the processor in FIG. 5.
FIG. 8 is a flowchart of information processing executed by the processor in FIG. 5.
FIG. 9 is a flowchart of information processing executed by the processor in FIG. 2.

### DETAILED DESCRIPTION

An order management apparatus according to the present embodiment is included, together with a shop system provided in a shop, in an order processing system for processing orders received with respect to product provision at the shop by an order reception system that receives orders for product provision at the shop. The order management apparatus includes an acquisition unit, an extraction unit, a generation unit, and a transmission unit. The acquisition unit acquires, from the order reception system, first order reception data including a plurality of items of data relating to an order for a product. The extraction unit extracts a data element relating to a predetermined item from among the data elements included in the first order reception data acquired by the acquisition unit. The generation unit generates second order reception data including the data element extracted by the extraction unit. If the first order reception data acquired by the acquisition unit includes timing information that designates a future time point as the provision timing of the product, the transmission unit waits until a time point determined according to the provision timing indicated by the timing information is reached, and transmits the second order reception data generated by the generation unit to the shop system.

An exemplary configuration of the embodiment will be described below with reference to the drawings. In the present embodiment, an order processing system for processing orders for products such as beverage and food cooked and served at an eat-in shop will be described as an example. Cooking is an example of a food and beverage preparation task for serving a product. The preparation task is not limited to cooking, and may be any task such as packaging of a cooked product, a ready-made product, or the like, procurement of ingredients before the cooking, and confirmation of a received order when an order for a product is received. In addition, the target products for orders placed on the order processing system are not limited to food and beverages, and a product serving shop is also not limited to restaurants. In addition, even if the shop is a restaurant, it may be a food shop that does not offer eat-in service, such as a place that takes to-go orders only.

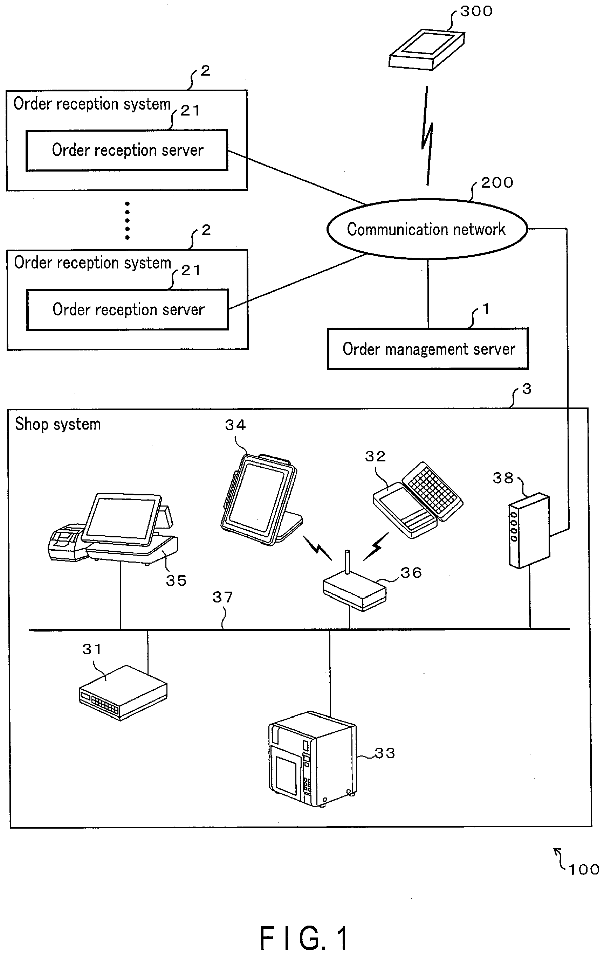

FIG. 1 is a diagram showing a schematic configuration of an order processing system 100 according to the present embodiment.

The order processing system 100 includes an order management server 1, a plurality of order reception systems 2, and a shop system 3. The order processing system 100 may include a plurality of shop systems 3. The order management server 1 is capable of communicating with the order reception systems 2 and shop systems 3 via a communication network 200. As the communication network 200, the Internet and mobile communication networks are typically adopted. However, the Internet, a mobile communication network, a local area network (LAN), a virtual private network (VPN), a public communication network and the like may be used singly or in combination for the communication network 200, as appropriate.

In relation to the orders received by the order reception systems 2, the order management server 1 collects and manages the first order reception data transmitted from the order reception systems 2 in different formats. Based on the first order reception data, the order management server 1 generates the second order reception data in a format suitable for handling at the shop systems 3, and supplies this second order reception data to the shop systems 3, thereby offering a service for mediating between the order reception systems 2 and the shop systems 3. The order management server 1 is an example of an order management apparatus.

The order reception systems 2 are operated by individual service providers who provide individual order reception proxy services. The configurations of the order reception systems 2 therefore differ from one another. Each of the order reception systems 2 includes an order reception server 21 to offer an order reception proxy service. The information processing executed by the order reception servers 21, however, differs depending on their individual order reception proxy services.

The shop system 3 is installed at a shop such as a restaurant that prepares and serves ordered products to a person who has placed an order. The shop system 3 is also referred to as a "restaurant POS system".

The shop system 3 includes a shop station 31, a hand-held terminal 32, a slip printer 33, a kitchen terminal 34, a POS terminal 35, a wireless router 36, a communication network 37, and a gateway 38. Although each of the shop station 31, the hand-held terminal 32, the slip printer 33, the POS terminal 35, and the wireless router 36 is singly illustrated in FIG. 1, the number of sets for each of these components can be freely determined. The shop system 3 often includes a plurality of hand-held terminals 32.

The shop system 3 is configured by arranging the shop station 31, the hand-held terminals 32, the slip printer 33, the kitchen terminal 34, and the POS terminal 35 in a manner communicable with each other via a communication network 37. The hand-held terminals 32 and the kitchen terminal 34 are connected to the communication network 37 via the wireless router 36 through wireless communications with the wireless router 36. The hand-held terminals 32 and the kitchen terminal 34, however, may be directly connected to the communication network 37. Alternatively, the shop station 31, the slip printer 33, and the POS terminal 35 may be connected to the communication network 37 via the wireless router 36 through wireless communications with the wireless router 36.

The shop station 31 manages the orders reported by the order management server 1 or orders received by the hand-held terminals 32.

A hand-held terminal 32 is an exemplary order terminal to which an operation for receiving an on-the-premises order is input. The hand-held terminal 32 is carried by a shop clerk and is manipulated by the clerk.

The slip printer 33 may be placed, for example, in a customer serving area or in a kitchen. The slip printer 33 in the customer serving area prints out order slips for customers. The slip printer 33 installed in the customer serving area is also referred to as a customer printer. The slip printer 33 in the kitchen prints out preparation slips for kitchen staff. That is, the slip printer 33 in the kitchen is also referred to as a kitchen printer.

The kitchen terminal 34 may be placed in a kitchen. The kitchen terminal 34 displays a screen so as to allow the kitchen staff or the like to check orders managed by the shop station 31. The kitchen terminal 34 also allows the kitchen staff or the like to input various instructions addressed to the shop station 31.

The POS terminal 35 may be arranged in the customer serving area or on a checkout counter. The POS terminal 35 performs information processing relating to various tasks including guiding customers to a table, order taking, serving, and checking out. The POS terminal 35 in the customer serving area executes information processing mainly relating to guiding, order receiving, waiting, and plate carrying, while the POS terminal 35 on the checkout counter additionally executes information processing relating to checking out. The POS terminal 35 may be specialized for a specific use so as to perform processing relating to only some of the above tasks.

The wireless router 36 conducts wireless communications with devices having a wireless communication function such as the kitchen terminal 34 and hand-held terminals 32, and also establishes communications among these devices via the communication network 37.

The communication network 37 transmits data exchanged between the devices, such as the shop station 31, the hand-held terminals 32, the slip printer 33, the kitchen terminal 34, and the POS terminal 35, which are equipped with a communication function. As the communication network 37, a LAN is typically used. However, a LAN, the Internet, a VPN, a public communication network, a mobile communication network, or the like may be adopted singly or in combination as appropriate, for the communication network 37.

The gateway 38 connects the communication network 37 and the communication network 200.

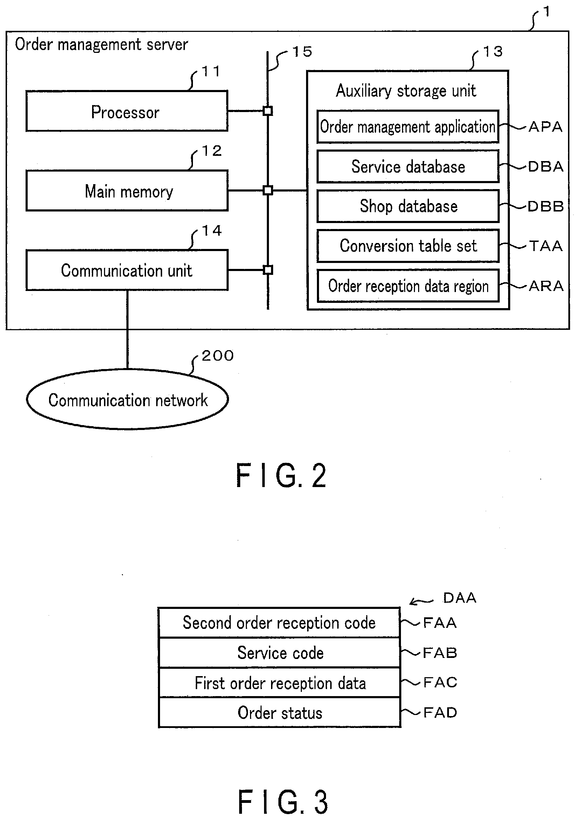

FIG. 2 is a block diagram showing the essential circuitry configuration of the order management server 1.

The order management server 1 includes a processor 11, a main memory 12, an auxiliary storage unit 13, a communication unit 14, a bus 15, and the like. The processor 11 is connected to the main memory 12, the auxiliary storage unit 13, and the communication unit 14 via the bus 15.

A computer is configured by connecting the processor 11, the main memory 12, and the auxiliary storage unit 13 via the bus 15.

The processor 11 serves as the center of the computer. The processor 11 executes information processing to realize the functions of the order management server 1 in accordance with information processing programs such as those of the operating system, middleware, and an application. The processor 11 may be, for example, a processing circuit such as a central processing unit (CPU), a graphics processing unit (GPU), an application specific integrated circuit (ASIC), or a programmable logic device (e.g., a simple programmable logic device (SPLD), a complex programmable logic device (CPLD), or a field programmable gate array (FPGA)). The processor 11 is not limited to the configuration of a single processing circuit, and the processor 11 may be configured by combining multiple processing circuits.

The main memory 12 corresponds to the main storage unit of the aforementioned computer. The main memory 12 includes a nonvolatile memory region and a volatile memory region. The main memory 12 stores an information processing program in the nonvolatile memory region. The main memory 12 may store, in the nonvolatile or volatile memory region, the data necessary for the processor 11 to execute the processing for controlling the units. The main memory 12 uses the volatile memory region as a work area in which the processor 11 can overwrite data as needed.

The auxiliary storage unit 13 corresponds to an auxiliary storage of the computer. As the auxiliary storage unit 13, well-known storage devices such as an electric erasable programmable read-only memory (EEPROM), a hard disc drive (HDD), or a solid state drive (SSD) can be adopted singly or in combination. The auxiliary storage unit 13 stores data used by the processor 11 to perform various types of processing and data generated through the processing by the processor 11. The auxiliary storage unit 13 stores information processing programs. One of the information processing programs stored in the auxiliary storage unit 13 is an application program (hereinafter, referred to as an "order management application") APA, which describes the information processing procedure for realizing the functions of the order management server 1. Part of the storage region of the auxiliary storage unit 13 is used as a service database DBA, a shop database DBB, a conversion table set TAA, and an order reception data region ARA.

The service database DBA is a set of data records associated with order reception proxy services provided by individual order reception systems 2 and including various types of data on each of the order reception proxy services. The data records of the service database DBA include at least service codes associated with order reception proxy services as identifiers of the respective order reception proxy services. The data records of the service database DBA may further include data such as addresses for transmitting data to the order reception servers 21, as needed.

The shop database DBB includes data records associated with the shop where a shop system 3 is provided, and containing various types of data relating to the shop. In the order management server 1 that provides a mediating service for a plurality of shops, a plurality of data records associated with a plurality of shops are included in the shop database DBB. The data records of the shop database DBB include at least shop codes (hereinafter, referred to as "second shop codes") associated with shops for the order management server 1 to identify the respective shops. The data records of the shop database DBB may also include data such as addresses for transmitting data to the order reception servers 21, as needed.

The conversion table set TAA is a set of conversion tables each associated with a combination of one of the order reception systems 2 and one of the shop systems 3. A conversion table indicates a shop code (hereinafter, referred to as a "first shop code") for the order reception system 2 to identify a shop and a second shop code in association with each other. The conversion table indicates product codes (hereinafter, referred to as "first product codes") as product identifiers used in the order reception system 2 and product codes (hereinafter, referred to as "second product codes") as product identifiers used in the shop system 3, in association with each other.

The order reception data region ARA stores management data for managing the first order reception data acquired from the order reception server 21. The order reception data region ARA is capable of storing a plurality of management items of data.

The communication unit 14 executes communication processing for data exchange via the communication network 200. For the communication unit 14, an existing communication device conforming to the communication standards of the communication network 200 may be adopted.

The bus 15 includes an address bus, a data bus, a control signal line, and the like, through which data and control signals that are to be exchanged between the connected units are transmitted.

For the order management server 1, a general-purpose computer can be used as its basic hardware. Here, in general, the order management application APA and the computer in which the order management application APA is not installed in the auxiliary storage unit 13 are separately provided. The provision of the order management application APA may be realized by recording it on a removable storage medium such as a magnetic disk, a magneto-optical disk, an optical disk, or a semiconductor memory, or by downloading it via a network. In such a case, the processor 11 writes the order management application APA into the auxiliary storage unit 13 in response to an operation by an operator. The provision of the order management server 1 may be conducted with the order management application APA stored in the auxiliary storage unit 13. The order management application APA may be stored in the main memory 12.

FIG. 3 is a diagram schematically showing the data structure of a record of management data DAA stored in the order reception data region ARA.

The management data DAA includes fields FAA, FAB, FAC, and FAD. Into the field FAA, an order reception code (hereinafter, referred to as a "second order reception code") is entered as an identifier for the shop system 3 to identify an order relating to the first order reception data. Into the field FAB, the service code of the order reception proxy service provider who has received the order relating to the first order reception data is entered. Into the field FAC, the first order reception data is entered. Into the field FAD, the status of the order relating to the first order reception data is entered.

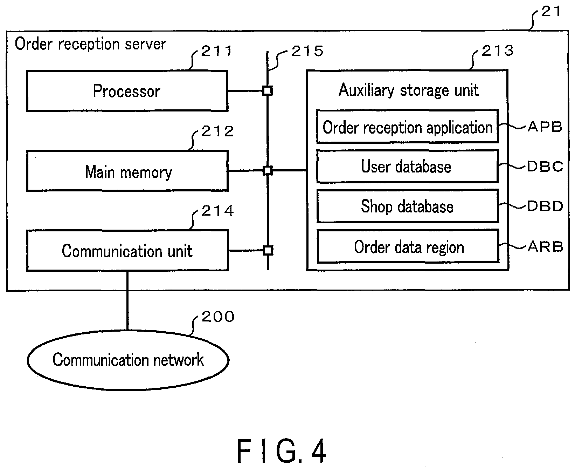

FIG. 4 is a block diagram showing the essential circuitry configuration of the order reception server 21.

The order reception server 21 includes a processor 211, a main memory 212, an auxiliary storage unit 213, a communication unit 214, a bus 215, and the like. The processor 211 is connected to the main memory 212, the auxiliary storage unit 213, and the communication unit 214 via the bus 215.

A computer is configured by connecting the processor 211, the main memory 212, and the auxiliary storage unit 213 via the bus 215.

The processor 211 serves as the center of the computer. The processor 211 executes information processing for realizing the functions of the order reception server 21 in accordance with information processing programs such as those of the operating system, middleware, and an application. The processor 211 may be a processing circuit such as a CPU, a GPU, an application specific integrated circuit (ASIC), or a programmable logic device. The processor 211 is not limited to the configuration of a single processing circuit, and the processor 211 may be configured by combining multiple processing circuits.

The main memory 212 corresponds to the main storage of the aforementioned computer. The main memory 212 includes a nonvolatile memory region and a volatile memory region. The main memory 212 stores an information processing program in the nonvolatile memory region. The main memory 212 may store data necessary for the processor 211 to execute the processing for controlling the units, in the nonvolatile or volatile memory region. The main memory 212 uses the volatile memory region as a work area, in which the processor 211 can overwrite data as needed.

The auxiliary storage unit 213 corresponds to an auxiliary storage of the computer. As the auxiliary storage unit 213, well-known storage devices such as an EEPROM, an HDD, or an SSD can be used singly or in combination. The auxiliary storage unit 213 stores data used by the processor 211 to perform various types of processing and data generated through the processing by the processor 211. The auxiliary storage unit 213 stores information processing programs. One of the information processing programs stored in the auxiliary storage unit 213 is an application program (hereinafter, referred to as an "order reception application") APB, which describes the information processing procedure for realizing the functions of the order reception server 21. Part of the storage region of the auxiliary storage unit 213 is used as a user database DBC, a shop database DBD, and an order data region ARB.

The user database DBC is a set of data records each associated with a user of the order reception proxy service and including various data relating to the user. A data record of the user database DBC contains at least a user code associated with the user as an identifier of this user. The data record of the user database DBC may also include other data as needed, such as personal information of the user, settlement information, or the identifier of a communication terminal used by the user when using the order reception proxy service. The user code may be determined for individual order reception proxy service providers.

The shop database DBD includes data records associated with shops participating in the order reception proxy service and including various types of data relating to the shops. If there are a plurality of shops affiliated with the order reception proxy service, a plurality of data records associated respectively with these shops are included in the shop database DBD. A data record of the shop database DBD includes at least a shop code (hereinafter, referred to as a "first shop code") associated with a shop for the order reception server 21 to identify this shop. The data record of the shop database DBD may further include data, such as the first product codes, relating to products offered at the associated shop, as needed. The first shop codes and the first product codes may be individually determined by each order reception proxy service provider. In other words, the first shop code for a certain shop may differ among the order reception proxy service providers. The first product code for a certain product may also differ among the order reception proxy service providers.

The order data region ARB stores management data for managing the descriptions of orders received from users. The order data region ARB is capable of storing a plurality of management items of data.

The communication unit 214 executes communication processing for data exchange via the communication network 200. For the communication unit 214, an existing communication device conforming to the communication standards of the communication network 200 may be adopted.

The bus 215 includes an address bus, a data bus, a control signal line, and the like, through which data and control signals that are to be exchanged between the connected units are transmitted.

For the order reception server 21, a general-purpose computer can be used as its basic hardware. Here, in general, the order reception application APB and the computer in which the order reception application APB is not installed in the auxiliary storage unit 213 are separately provided. The provision of the order reception application APB may be realized by recording it on a removable storage medium such as a magnetic disk, a magneto-optical disk, an optical disk, or a semiconductor memory, or by downloading it via a network. In such a case, the processor 211 writes the order reception application APB into the auxiliary storage unit 213 in response to a manipulation by an operator. The provision of the order reception server 21 may be conducted with the order reception application APB stored in the auxiliary storage unit 213. The order reception application APB may be stored in the main memory 212.

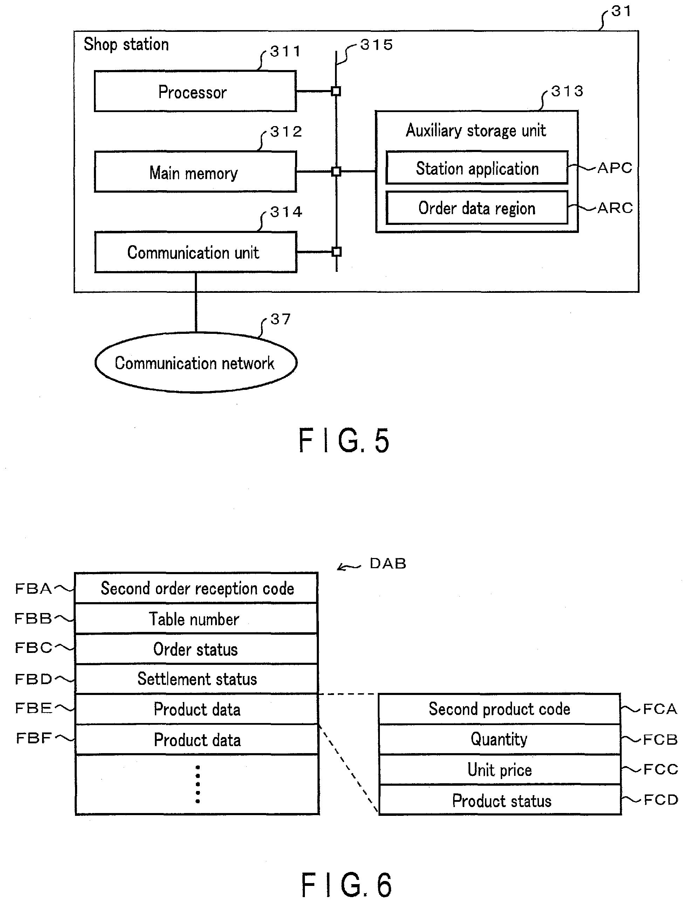

FIG. 5 is a block diagram showing the essential circuitry configuration of the shop station 31.

The shop station 31 includes a processor 311, a main memory 312, an auxiliary storage unit 313, a communication unit 314, and a bus 315.

The processor 311, the main memory 312, and the auxiliary storage unit 313 are connected by the bus 315 to constitute a computer that executes information processing for realizing the functions of the shop station 31.

The processor 311 serves as the center of the computer. The processor 311 executes information processing in accordance with information processing programs such as the programs of an operating system, middleware, and an application stored in the main memory 312 or the auxiliary storage unit 313. The processor 311 may be a processing circuit such as a CPU, a GPU, an application specific integrated circuit (ASIC), or a programmable logic device. The processor 311 is not limited to the configuration of a single processing circuit, and the processor 311 may be configured by combining multiple processing circuits.

The main memory 312 corresponds to the main storage unit of the aforementioned computer. The main memory 312 includes a nonvolatile memory region and a volatile memory region. The main memory 312 stores the aforementioned information processing programs in the non-volatile memory region. The main memory 312 may store the data necessary for the processor 311 to execute the processing for controlling the units, in the nonvolatile or volatile memory region. The main memory 312 uses the volatile memory region as a work area in which the processor 311 can overwrite data as needed.

The auxiliary storage unit 313 corresponds to the auxiliary storage of the computer. The auxiliary storage unit 313 is, for example, an EEPROM, an HDD, an SSD, or the like. The auxiliary storage unit 313 stores data used by the processor 311 to perform various kinds of processing or data generated through the processing by the processor 311. The auxiliary storage unit 313 may store the aforementioned information processing programs.

The communication unit 314 performs communication processing for the processor 311 to transmit and receive data via the communication network 37.

The bus 315 includes an address bus, a data bus, a control signal line, and the like, through which data and control signals that are to be exchanged between the connected units are transmitted.

The auxiliary storage unit 313 stores the station application APC, which is one of the information processing programs. The station application APC is an application program that describes information processing for realizing the operation of the shop station 31. For the basic hardware of the shop station 31, a general-purpose information processing device may be adopted. In general, the provision of the shop station 31 may be realized with the station application APC stored in the auxiliary storage unit 313. However, the station application APC and the hardware without a station application APC stored in the auxiliary storage unit 313 may be separately provided. In such a case, the shop station 31 can be configured by writing the station application APC into the auxiliary storage unit 313 in response to a manipulation by an operator. Alternatively, the shop station 31 may be configured by rewriting a station application stored in the auxiliary storage unit 313 to the station application APC in response to a manipulation by an operator. The provision of the station application APC can be realized by recording the application in a removable storage medium such as a magnetic disk, a magneto-optical disk, an optical disk, or a semiconductor memory, or through communication via a network. The station application APC may be stored in the main memory 312.

Part of the storage region of the auxiliary storage unit 313 is used as an order data region ARC for storing order management data. The order data region ARC is capable of storing a plurality of order management data.

FIG. 6 is a diagram schematically showing the configuration of a record of order management data DAB stored in the order data region ARC.

Order management data DAB is associated with an order relating to a group of customers or an order received by the order reception system 2. The order management data DAB includes fields FBA, FBB, FBC, FBD, and FBE. The order management data DAB may include a field FBF and subsequent fields.

Into the field FBA, a second order reception code associated with an order is entered to identify this order. The second order reception code may also be referred to as a "slip code" or the like. Into the field FBB, a table number may be entered as an identifier to identify the customer's seat relating to the associated order. Into the field FBC, the status managed by the shop station 31 relating to the associated order (hereinafter, referred to as an "order status") is entered. Into the field FBD, a status relating to the billing of the associated order (hereinafter, referred to as a "settlement status") is entered. Into the field FBE, product data relating to the product, which is the target of the associated order, is entered. If a plurality of products are received for the associated order, the field FBF and subsequent fields may be added to the order management data DAB so that the product data can be entered into these fields.

Each of the product items of data entered into the field FBE and subsequent fields includes fields FCA, FCB, FCC, and FCD. Into the field FCA, the second product code is entered. Into the field FCB, the quantity of the ordered product is entered. Into the field FCC, the unit price of the product is entered. Into the field FCD, the status relating to the ordered product (hereinafter, referred to as a "product status") is entered.

The order management data DAB and the product data may not include some of these fields, such as the field FBB or field FCC. Furthermore, the order management data DAB and the product data may include fields that are not indicated in FIG. 6 for entering any arbitrary data.

Next, the operation of the order processing system 100 configured as described above will be described. The descriptions of the processing operations below are merely presented as examples. The sequence of the processing operations may be partly changed or partly omitted, or some other processing operation may be added as appropriate. In the following explanation, the description of the processing is partly omitted in order to clarify the characteristic operation of the present embodiment. For instance, at the occurrence of an error, processing for dealing with such an error may be performed. The description of such processing, however, is omitted here.

When the shop station 31 is in an operating state for order management, the processor 311 performs information processing as described below, in accordance with the station application APC.

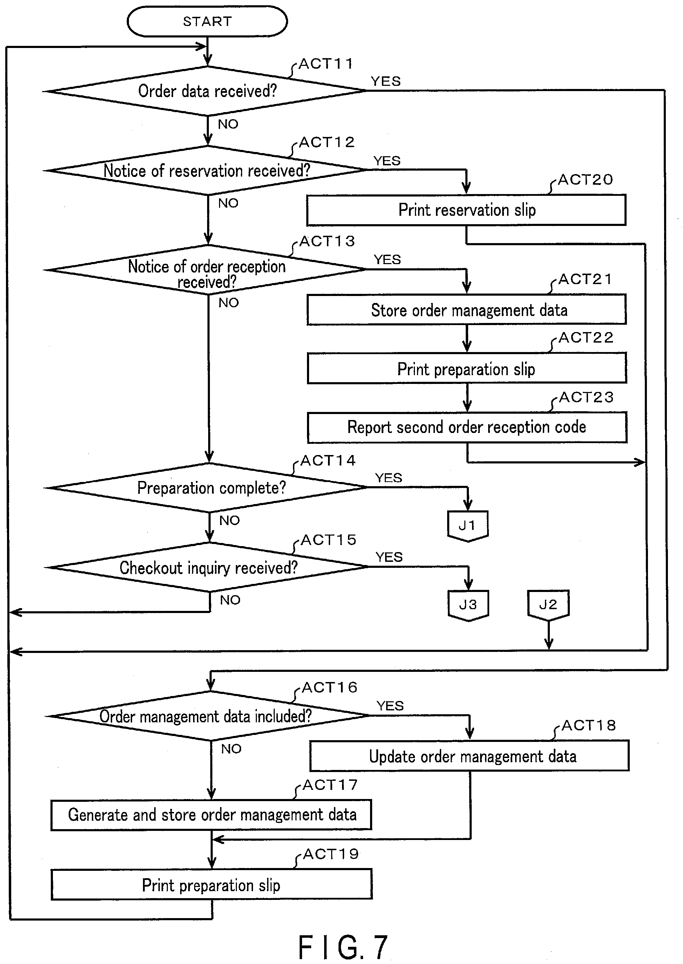

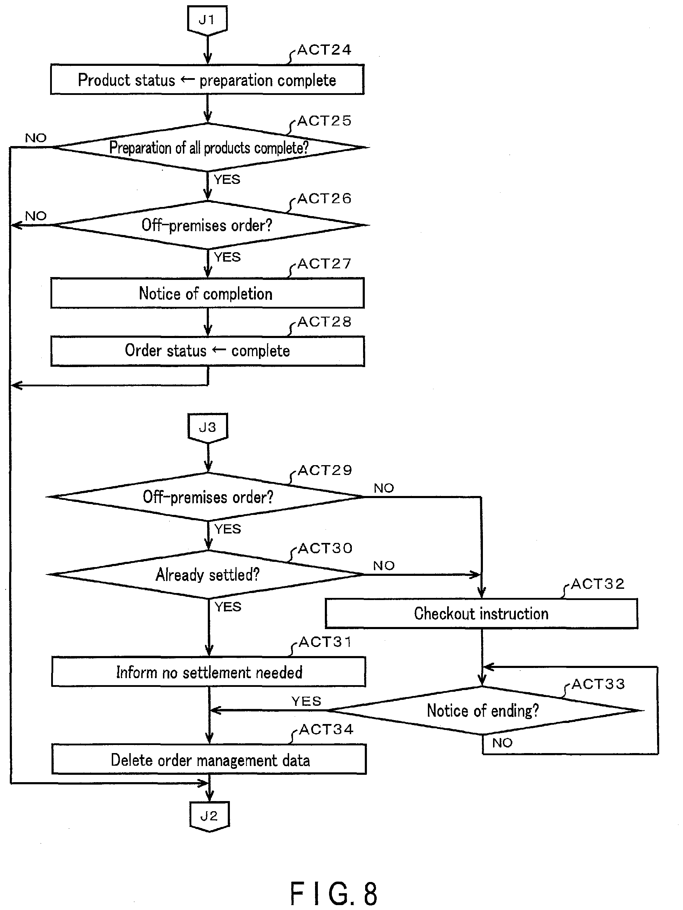

FIGS. 7 and 8 are flowcharts of the information processing executed by the processor 311.

At ACT 11 in FIG. 7, the processor 311 determines whether or not order data transmitted from the hand-held terminal 32 is received. If such an event is not confirmed, the processor 311 determines "NO" and proceeds to ACT 12.

At ACT 12, the processor 311 determines whether or not a notice of reservation is made by the order management server 1. If such an event is not confirmed, the processor 311 determines "NO" and proceeds to ACT 13.

At ACT 13, the processor 311 determines whether or not a notice of order reception is received from the order management server 1. If such an event is not confirmed, the processor 311 determines "NO" and proceeds to ACT 14.

At ACT 14, the processor 311 determines whether or not a notice indicating that the preparation of the ordered product is completed is made. If such an event is not confirmed, the processor 311 determines "NO" and proceeds to ACT 15.

At ACT 15, the processor 311 determines whether or not a checkout inquiry is received from the POS terminal 35. If such an event is not confirmed, the processor 311 determines "NO" and proceeds to ACT 11.

In this manner, the processor 311 waits for the occurrence of any of the events at ACT 11 through ACT 15, namely reception of order data, notification of reservation, notification of order reception, completion of preparation, or a checkout inquiry.

The order placed by the customer on the premises of the shop is received by a clerk, and then input to the hand-held terminal 32 by the manual operation of the clerk. In accordance with this operation, the hand-held terminal 32 generates order data and transmits it to the shop station 31 via the wireless router 36 and the communication network 37. The hand-held terminal 32 sets in the order data at least a table number assigned to the seat occupied by the customer who has placed the order and the second product code of the ordered product. When two or more products are designated as the order quantity of the product identified by a certain second product code, the hand-held terminal 32 sets this quantity in the order data. When a plurality of products are ordered, the hand-held terminal 32 may sequentially transmit the order items of data that respectively include the second product code of one of the products, or may transmit one order data item that includes all of the second product codes.

When the order data is transmitted to the shop station 31 through the communication network 37, the communication unit 314 receives this order data. In response, the processor 311 determines "YES" at ACT 11 and proceeds to ACT 16.

At ACT 16, the processor 311 determines whether or not the order data region ARC includes order management data DAB that needs to be updated based on the order data. For instance, the processor 311 searches the order data region ARC for order management data DAB in which a table number included in the order data is entered into the field FBB. If no such order management data DAB is found, the processor 311 determines "NO" and proceeds to ACT 17.

At ACT 17, the processor 311 generates new order management data DAB that differs from the order management data DAB previously stored in the order data region ARC, and stores the new order management data DAB in the order data region ARC. The processor 311 may enter, into the field FBA of the new order management data DAB, a second order reception code determined according to predetermined rules so that the second order reception code will be different from the second order reception code of the order management data DAB previously stored in the order data region ARC. The processor 311 may enter the table number included in the order data into the field FBB of the new order management data DAB. For the order status to be entered into the field FBC of the new order management data DAB, the processor 311 may enter a state indicating "incomplete". For the settlement status to be entered into the field FBD of the new order management data DAB, the processor 311 may enter a state indicating "unsettled". Into the field FBE and subsequent fields of the new order management data DAB, the processor 311 sets fields for product data associated with the second product code included in the order data. For example, the processor 311 may enter the associated second product code into the field FCA of the product data. If the quantity relating to the associated second product code is included in the order data, the processor 311 may enter this quantity into the field FCB of the product data, and if the quantity is not included in the order data, "1" may be entered. The processor 311 may enter the unit price of the product identified by the associated second product code into the field FCC of the product data. The processor 311 may obtain the unit price by referring to a master product database stored in the auxiliary storage unit 313 or any storage device provided in an external device such as a POS server (not shown). For the product status to be entered into the field FCD of the product data, the processor 311 may enter a state indicating "order received".

On the other hand, if order management data DAB in which a table number included in the order data is entered into the field FBB is found from the order data region ARC, the processor 311 determines "YES" at ACT 16 and proceeds to ACT 18.

At ACT 18, the processor 311 updates the found order management data DAB based on the order data. For instance, after the field at the bottom of the corresponding order management data DAB, the processor 311 may add another field in which the product data associated with the product code included in the order data is entered. If the processor 311 proceeds to ACT 18 for the first time and the field FBE is at the bottom of the order management data DAB, the field FBF will be added.

When completing ACT 17 or ACT 18, in either case, the processor 311 proceeds to ACT 19.

At ACT 19, the processor 311 instructs the slip printer 33 to print a preparation slip. Thereafter, the processor 311 returns to the standby state for ACT 11 to ACT 15.

When a user accesses the order reception server 21 via the communication network 200 with a communication terminal such as the mobile terminal 300 of FIG. 1 and sends an order for a product through a predetermined instruction, the processor 211 of the order reception server 21 receives this order. The processor 211 places the descriptions of the received order under its management. The processing of the processor 211 here may be the same as, for example, the processing performed on an existing web server that provides an order reception proxy service. The processor 211 also generates the first order reception data representing the descriptions of the order in a format determined for each order reception system 2, and sends to the communication network 200 this first order reception data addressed to the order management server 1. The processor 211 of each order reception server 21 sets in the first order reception data at least the first order reception code determined by itself, the first shop code of the order destination shop, the first product code and quantity of the ordered product, the timing information, and the settlement data. If the time point for the provision of the product (hereinafter, referred to as "reservation time") is designated by the user, the processor 211 sets the timing information indicating the reservation time in the first order reception data, and if the reservation time is not designated, the processor 211 sets timing information indicating "immediate" in the first order reception data. When the order reception proxy service stipulates that the settlement for orders is made through the order reception system 2, or when the settlement on the order reception system 2 is designated by the user, the processor 211 calculates the total amount for the received order and performs settlement processing to have the user make settlement. When this settlement processing is performed, the processor 211 sets, as the settlement data, the data indicating "settled" in the first order reception data. However, if the settlement processing is not performed, the processor 211 sets, as the settlement data, the data indicating a settlement option designated by the user in the first order reception data.

On the other hand, the processor 11 of the order management server 1 performs information processing described below, in accordance with the order management application APA.

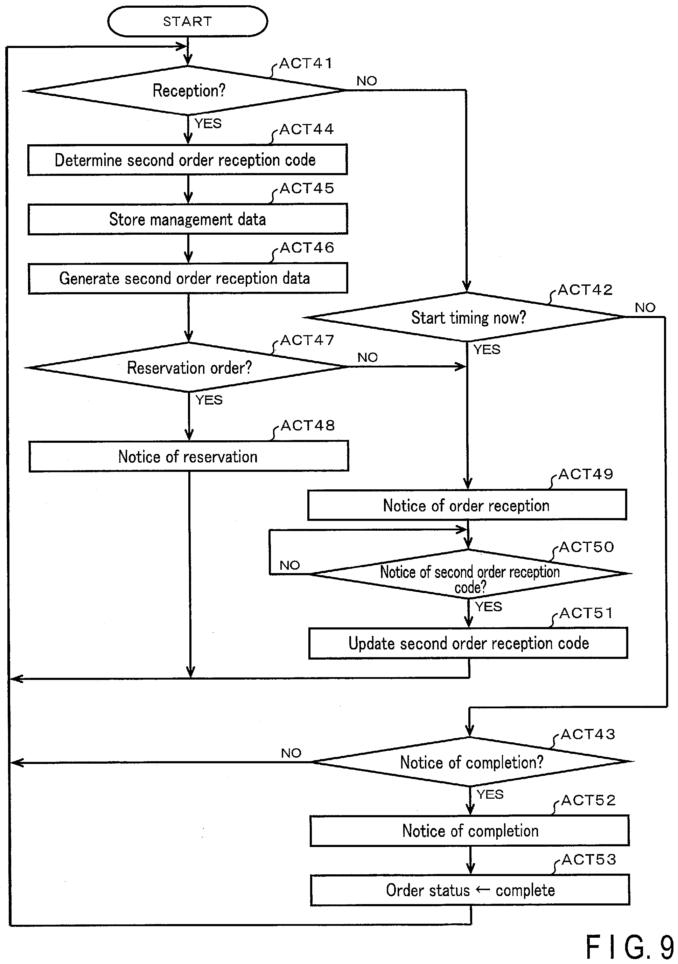

FIG. 9 is a flowchart of the information processing performed by the processor 11.

At ACT 41, the processor 11 determines whether or not the first order reception data is received. If such an event is not confirmed, the processor 11 determines "NO" and proceeds to ACT 42.

At ACT 42, the processor 11 determines whether or not a start timing, which will be described later, relating to any of the orders under its management has arrived. If such an event is not confirmed, the processor 11 determines "NO" and proceeds to ACT 43.

At ACT 43, the processor 11 determines whether or not a notice of completion of preparation is sent from the shop system 3. If such an event is not confirmed, the processor 11 determines "NO" and returns to ACT 41.

In this manner, the processor 11 waits for the reception of the first order reception data, the arrival of the start timing, or the notification of the completion of preparation between ACT 41 and ACT 43.

As described above, when the first order reception data transmitted from the order reception server 21 is sent to the order management server 1 through the communication network 200, the communication unit 14 receives this first order reception data. Then, the processor 11 determines "YES" at ACT 41, and proceeds to ACT 44. In the following description of the processing executed by the processor 11, the term "first order reception data" refers to the first order reception data that has been received here.

At ACT 44, the processor 11 tentatively determines the second order reception code. The processor 11 determines the second order reception code, for example, according to predetermined rules so as to not overlap with the second order reception codes in the fields FAA of the management data DAA already included in the order reception data region ARA.

At ACT 45, the processor 11 stores new management data DAA in the order reception data region ARA. Into the field FAA of the new management data DAA, the processor 11 enters the second order reception code determined at ACT 44. Into the field FAB of the new management data DAA, the processor 11 enters the service code of the order reception proxy service to which the order reception server 21 that has transmitted the first order reception data belongs. Into the field FAC of the new management data DAA, the processor 11 enters the first order reception data. For the order status to be entered into the field FAD of the new management data DAA, the processor 11 sets a state indicating "incomplete". The processor 11 may store the first order reception data, separately from the management data DAA, in the main memory 12, the auxiliary storage unit 13, or any other storage device, and may set the file path of the first order reception data in the management data DAA.

At ACT 46, the processor 11 generates second order reception data. The processor 11 may extract all the combinations of the first product codes and the quantities from the first order reception data. For instance, the processor 11 selects, from among a plurality of conversion tables included in the conversion table set TAA, a conversion table associated with a combination of the order reception system 2, to which the order reception server 21 that has transmitted the first order reception data belongs, and the shop, which is identified by the first shop code included in the first order reception data. For example, the processor 11 converts the first product code in the extracted combination of the first product code and the quantity into the second product code based on the selected conversion table. However, if the order reception server transmitting the first order reception data uses, as the first product codes, the same product codes as the second product codes, the processor 11 may omit this conversion. For instance, the processor 11 may generate the second order reception data, in which a combination of the quantity and the second product code obtained through the above-described conversion and a table number predetermined as data indicating an order made off-premises of the shop are described in the same format as that of the order data transmitted from the hand-held terminal 32. An order made off-premises of the shop refers to an order received by the order reception system 2.

The processor 11 extracts the first product code and the quantity included as part of the data elements in the above first order reception data. That is, by the processor 11 executing the information processing based on the order management application APA, the computer with the processor 11 serving as its center functions as an extraction unit. Then, the processor 11 generates the second order reception data including the extracted data elements in a predetermined format. That is, by the processor 11 executing the information processing based on the order management application APA, the computer, which has the processor 11 serving as its center, functions as a generation unit.

At ACT 47, the processor 11 determines whether or not the first order reception data relates to a reservation order. The reservation order here denotes an order in which a reservation time is designated for the provision of a product. If the timing information included in the first order reception data indicates a reservation time, the processor 11 determines "YES" and proceeds to ACT 48.

At ACT 48, the processor 11 issues a notice of reservation to a shop that is to provide a product in accordance with the order. The notice of reservation is to inform the shop that a reservation order has been received. The processor 11 may transmit from the communication unit 14 to the communication network 200 the reservation notice data including identification data identifying that the notice is for reservation, the second order reception data, and the timing information included in the first order reception data. The processor 11 determines, as the destination of the reservation notice data, the shop identified by the second shop code associated with the first shop code in the first order reception data according to the conversion table selected at ACT 46. That is, the processor 11 may determine, as the destination of the reservation notice data, the address included together with the second shop code of one of the data records included in the shop database DBB. In this manner, if the first order reception data includes the timing information indicating a reservation time that designates a future timing as the provision timing of a product, the processor 11 notifies the shop system 3 of the order reception together with a notice of the provision timing, before transmission of the second order reception data, as described later. That is, by the processor 11 executing the information processing based on the order management application APA, the computer having the processor 11 as its center serves as a notification unit. Thereafter, the processor 11 returns to the standby state of ACT 41 to ACT 43.

When the reservation notice data is transmitted via the communication network 200 to the shop system 3 determined as the transmission destination, the communication unit 314 provided in the shop station 31 of the shop system 3 receives this reservation notice data. In response, the processor 311 determines "YES" at ACT 12 in FIG. 7 and proceeds to ACT 20.

At ACT 20, the processor 311 prints a reservation slip. For example, based on the second order reception data included in the reservation notice data, the processor 311 may cause the slip printer 33 to print a reservation slip indicating the product, which is the target of the reservation order, and time for the reservation. Thereafter, the processor 311 returns to the standby state of ACT 11 to ACT 15. Instead of, or in addition to, printing of a reservation slip, the processor 311 may cause the kitchen terminal 34 to display a screen showing the reservation time and the product that is the target of the reservation order. Alternatively, the processor 311 may store the reservation notice data or the second order reception data included in the reservation notice data in the main memory 312 or the auxiliary storage unit 313, and cause the kitchen terminal 34 to display a screen showing the reservation time and the product that is the target of the reservation order, at any timing after storing, in response to a request from the kitchen terminal 34.

In the order management server 1, if the timing information included in the first order reception data indicates "immediate", the processor 11 determines "NO" at ACT 47 in FIG. 9, and proceeds to ACT 49. If the management data DAA in the order reception data region ARA include management data DAA for which the reservation time indicated by the timing information included in the first order reception data in the field FAC has arrived during the standby state of the processor 11 from ACT 41 to ACT 43, the processor 11 determines "YES" at ACT 42, and proceeds to ACT 49. The processor 11 may determine that the start timing has arrived when the current time has passed the reservation time, or may determine that the start timing has arrived when the current time has passed a period of time earlier than the reservation time. That is, the start timing may be determined by the creator of the order management application APA or administrator or the like of the order management server 1 as a timing at which the preparation for the order is to be started. The actual timing, however, at which the preparation starts is determined according to various circumstances at the shop, and therefore may not coincide with the start timing.

At ACT 49, the processor 11 issues a notice of order reception to the shop that is to provide the product corresponding to the order. The notice of order reception is to notify the shop that the preparation based on the order is required. For example, the processor 11 may transmit the order reception notice data including identification data for identifying the notice of order reception, the second order reception data, and the settlement data from the communication unit 14 to the communication network 200. When proceeding from the ACT 42 to the ACT 49, if the first order reception data includes the timing information indicating the reservation time that designates a future time point as the provision timing of the product, the processor 11 waits until the timing that is determined in accordance with the provision timing indicated by the timing information, and transmits the second received order information. In this manner, by the processor 11 executing the information processing based on the order management application APA, the computer that has the processor 11 serving as its center functions as a transmission unit. When the processor 11 determines "NO" at ACT 47 and proceeds to ACT 49, the processor 11 determines, as the destination of the notice of reservation, the shop identified by the second shop code associated with the first shop code that is included in the first order reception data with reference to the conversion table selected at ACT 46, and sets in the order reception notice data the settlement data included in this first order reception data that has been received immediately before. On the other hand, when the processor 11 determines "YES" at ACT 42 and proceeds to ACT 49, the processor 11 selects, from the conversion tables included in the conversion table set TAA, a conversion table associated with the combination of the order reception system 2 to which the order reception server 21 belongs and the shop identified by the first shop code included in the first order reception data, where this order reception server 21 has transmitted the first order reception data that contains timing information, based on which the determination of "YES" has been made at ACT 42. The processor 11 determines the shop identified by the second shop code associated with the first shop code included in the first order reception data based on the selected conversion table, as the destination of the notice of reservation. When the processor 11 determines "YES" at ACT 42 and proceeds to ACT 49, the processor 11 sets in the order reception notice data the settlement data included in the first order reception data, which includes the timing information based on which the determination of "YES" has been made at ACT 42.

When the order reception notice data is transmitted via the communication network 200 to the shop system 3 determined as the destination, the communication unit 314 of the shop station 31 in the shop system 3 receives this order reception notice data. In response, the processor 311 determines "YES" at ACT 13 in FIG. 7 and proceeds to ACT 21.

At ACT 21, the processor 311 generates new order management data DAB based on the received order reception notice data and stores it in the order data region ARC. The processor 311 generates new order management data DAB in the same manner as at ACT 17, based on the second order reception data included in the order reception notice data. The processor 311 may enter the settlement data included in the order reception notice data into the field FBD of the new order management data DAB. The processor 311 determines the second order reception code in the same manner as at ACT 17. This may be omitted, however, and the second order reception code determined by the processor 11 may be entered into the field FBA of the new order management data DAB. If this is the case, the determination of the second order reception code by the processor 11 at ACT 44 in FIG. 9 is performed in such a manner as to not overlap the second order reception code determined by the processor 211. The processor 11 sets the second order reception code determined by the processor 11 at ACT 44 in the order reception notice data.

By storing the order management items of data DAB in the order data region ARC, the processor 311 manages the second order reception data in association with the second order reception codes, which serve as the second order identifiers. That is, by the processor 311 executing the information processing based on the station application APC, the computer, which has the processor 311 as its center, functions as the second management unit.

At ACT 22, the processor 311 prints a preparation slip, for example, in the same manner as at ACT 19. By printing the preparation slip, the operator will be reported that the preparation operation for providing the product based on the second order reception data should be started. In this manner, by the processor 311 executing the information processing based on the station application APC, the computer, which has the processor 311 as its center, functions as a reporting unit.

At ACT 23, the processor 311 notifies the order management server 1 of the second order reception code determined at ACT 21. For example, the processor 311 sends code notice data, which is addressed to the order management server 1 and includes identification data for identifying the notice of the second order reception code and the second order reception code, from the communication unit 314 to the communication network 37. Thereafter, the processor 311 returns to the standby state of ACT 11 to ACT 15.

In the order management server 1, after performing the notification of order reception at ACT 49 in FIG. 9, the processor 11 proceeds to ACT 50.

At ACT 50, the processor 11 waits for the notification of the second order reception code. When the code notice data from the shop station 31 is sent to the order management server 1 via the communication network 37, the gateway 38, and the communication network 200 as described above and is received by the communication unit 14, the processor 11 determines "YES" and proceeds to ACT 51.

At ACT 51, the processor 11 updates the second order reception code in the field FAA of the management data DAA stored in the order reception data region ARA at ACT 45 to the second order reception code included in the code notice data. Thereafter, the processor 11 returns to the standby state of ACT 41 to ACT 43.

As described above, if the second order reception code determined by the processor 11 at ACT 44 is entered into the field FBA of order management data DAB, the processing of ACT 23 in FIG. 7 by the processor 311 and the processing of ACT 50 and ACT 51 in FIG. 9 by the processor 11 may be omitted.

The kitchen staff confirms the descriptions of the order with reference to the preparation slip printed out by the slip printer 33, and thereby prepares the ordered product. When the preparation is completed, the kitchen staff or other staff notifies the shop station 31 of the completion of the preparation, together with a notification regarding which product is for which order. This notification is performed, for example, on the hand-held terminal 32 or the kitchen terminal 34 in accordance with a manipulation by the kitchen staff or other staff. After the completion of the preparation is reported in this manner, the processor 311 determines "YES" at ACT 14 in FIG. 7 and proceeds to ACT 24 in FIG. 8.

At ACT 24, the processor 311 changes the product status of the product for which the preparation has been completed to "preparation complete". The processor 311 searches, for example, the order data region ARC for the order management data DAB associated with the reported order. Then, the processor 311 changes the product status in the field FCD of the product data associated with the product for which the completion of the preparation has been reported, among the product data included in the corresponding order management data DAB, to a status indicating "preparation complete".

At ACT 25, the processor 311 confirms whether or not the preparation of all the products in the same order is completed based on the above-described completion of preparation. For instance, if the product status in the field FCD indicates "preparation complete" for all the product data included in the order management data DAB found at ACT 24, the processor 311 determines "YES" and proceeds to ACT 26.

At ACT 26, the processor 311 confirms whether or not the order for which the preparation of all the products has been completed with the above completion of the preparation is an order that has come from the outside of the shop. The processor 311 determines "YES", for example, if the table number in the field FBB of the order management data DAB found at ACT 24 is a table number predetermined to indicate that the order is from the outside of the shop, and proceeds to ACT 27.

At ACT 27, the processor 311 notifies the order management server 1 of the completion. The processor 311 may transmit, for example, first completion notice data addressed to the order management server 1 and containing identification data for identifying the notification of completion and the second order reception code, from the communication unit 314 to the communication network 37.

At ACT 28, the processor 311 changes the order status of the order for which the preparation of all the products is completed with the above completion of the preparation, to "complete". The processor 311 updates, for example, the order status in the field FBC of the order management data DAB found at ACT 24, to a status indicating "complete". Thereafter, the processor 311 returns to the standby state of ACT 11 to ACT 15 in FIG. 7.

In the order management server 1, when the first completion notice data from the shop station 31 is transmitted to the order management server 1 via the communication network 37, the gateway 38, and the communication network 200, as described above, and is received by the communication unit 14, the processor 11 determines "YES" at ACT 43 in FIG. 9 and proceeds to ACT 52.

At ACT 52, the processor 11 notifies the order reception server 21, which is the receiver of the order for which the completion has been reported, of the completion of the preparation. For example, the processor 11 searches the order reception data region ARA for the management data DAA in which the second order reception code included in the received first completion notice data is in the field FAA. Then, the processor 11 may send, from the communication unit 14 to the communication network 200, the second completion notice data containing the first order reception code included in the first order reception data in the field FAC of the corresponding management data DAA, together with identification data for identifying the notification of completion. The processor 11 may adopt the address associated in the service database DBA with the service code in the field FAC of the above management data DAA, as the destination of the second completion notice data.

At ACT 53, the processor 11 changes the order status of the order regarding which the completion is notified, to "complete". The processor 11 may update, for example, the order status in the field FAD of the management data DAA found at ACT 52 to a state indicating "complete". Thereafter, the processor 11 returns to the standby state of ACT 41 to ACT 43.

In the order reception server 21, when the second completion notice data transmitted from the order management server 1 is sent to the order reception server 21 via the communication network 200 as described above and received by the communication unit 214, the processor 211 requests the user or a delivery person to pick up the order. That is, if it is determined by the rules of the order reception proxy service that the order placed under the management in association with the first order reception code contained in the second completion notice data is to be delivered by a delivery person or if the user has selected a delivery performed by a delivery person, the processor 211 requests the delivery person to pick up the products at the shop. Furthermore, if it is determined by the rules of the order reception proxy service that the user him/herself is to come to the shop to pick up the products of the order placed under management in association with the first order reception code contained in the second completion notice data or if the user has selected coming to the shop to pick up the products by him/herself, the processor 211 requests the user to pick up the products. Such a request is realized by, for example, displaying a screen on the mobile terminal 300 carried by the delivery person, displaying a screen on the mobile terminal 300 carried by the user, or the like. Specifically, the processor 211 outputs, for example, data relating to a message or the like requesting a pickup of products at the shop, to the mobile terminal 300. The mobile terminal 300 may receive the data and display a message on the screen. The delivery person or the user who has received this request will appear at the shop and report to the clerk that he/she is picking up the products. In response to this reporting from the delivery person or the user, the clerk performs a predetermined manipulation on the POS terminal 35 to input a checkout inquiry of the products to be delivered.

On the other hand, if the preparation of the products ordered at the shop is completed, the clerk provides the products to the customer in the shop. The customer provided with the products in the shop makes a request for settlement to the clerk if the customer finishes using the shop. In response to this request, the clerk performs a predetermined manipulation on the POS terminal 35 to input a checkout inquiry.

It is assumed that the clerk's manipulation for inputting the checkout inquiry may be a manipulation of having the POS terminal 35 read a bar code that demonstrates the second order reception code. For this case, the processor 311 of the shop station 31 may cause the slip printer 33 to print a slip demonstrating the bar code before or after printing out the preparation slip at ACT 19 so that the clerk may hand this slip to the customer. If the processor 311 has determined "YES" at ACT 26, the processor 311 may cause the slip printer 33 to print a slip demonstrating the bar code so that this slip can be attached to the product.

When a checkout inquiry is input as described above, the POS terminal 35 sends a checkout inquiry to the shop station 31, together with the notification of the second order reception code.

At the shop station 31, upon receipt of the checkout inquiry, the processor 311 determines "YES" at ACT 15 in FIG. 7, and proceeds to ACT 29 in FIG. 8.

At ACT 29, the processor 311 confirms whether or not the target order in the inquiry has come from the outside of the shop. For example, the processor 311 searches the order data region ARC for the order management data DAB in which the second order reception code reported for the checkout inquiry is in the field FBA. If the field FBB of the order management table DAB demonstrates a table number predetermined to indicate that the order is from the outside of the shop, the processor 311 determines "YES" and proceeds to ACT 30.

At ACT 30, the processor 311 confirms whether or not the target order of the inquiry has been settled. If, for example, the settlement status in the field FBD of the order management data DAB found at ACT 29 indicates "settled", the processor 311 determines "YES" and proceeds to ACT 31.

At ACT 31, the processor 311 notifies the POS terminal 35 that settlement is not needed. In response to this notification, the POS terminal 35 displays a screen predetermined to inform the clerk that settlement is not needed. The clerk, who confirms on the screen that settlement is not needed, hands the products to the delivery person or the user.

For instance, if the settlement status in the field FBD of the order management data DAB found at ACT 29 does not demonstrate "settled", the processor 311 determines "NO" at ACT 30, and proceeds to ACT 32. At ACT 29, if the field FBB of the found order management data DAB bears data determined to identify a certain customer seat of the shop, the processor 311 determines "NO" at ACT 29, and proceeds to ACT 32 without proceeding to ACT 30. That is, the processor 311 proceeds to ACT 32 in the case of an on-premises order and in the case where settlement is not completed.

At ACT 32, the processor 311 instructs the POS terminal 35 to perform checking out for the target order of the inquiry. In response to this instruction, the POS terminal 35 calculates the amount of payment for the provision of the products corresponding to the target order of the inquiry so as to have the delivery person, the user, or the customer make settlement. Here, if the settlement status is "unsettled", the POS terminal 35 applies the settlement option designated by the customer among the settlement options acceptable at the shop. If the settlement status indicates a certain settlement option, the POS terminal 35 applies this settlement option. When the settlement is completed, the POS terminal 35 informs the order management server 1 of the completion. If the settlement is completed by the delivery person or the user, the clerk hands the products over to the delivery person or the user.

At ACT 33, the processor 311 waits for a notice of ending. When the ending is reported from the POS terminal 35 as described above, the processor 311 determines "YES" and proceeds to ACT 34. If ACT 31 is finished, the processor 311 proceeds to ACT 34.

At ACT 34, the processor 311 deletes, from the order data region ARC, the order management data DAB relating to the order for which the settlement which is the target of the checkout inquiry is completed. The processor 311 may store the to-be-deleted order management data DAB as sales data for which the settlement is completed, in a region other than the order data region ARC of the auxiliary storage unit 313 or in a separate storage device. Thereafter, the processor 311 returns to the standby state of ACT 11 to ACT 15.

As described above, when the first order reception data acquired from the order reception system 2 includes the timing information indicating a future reservation time as the provision timing of the product, the order management server 1 waits for the start timing determined according to the provision timing indicated by the timing information and then transmits the second order reception data based on the first order reception data to the shop system 3. Therefore, in the shop using the shop system 3, the preparation may be started in response to the reception of the second order reception data without considering the time lag between the timing at which the order is received and the reservation time, and thus the burden on the shop side is reduced.

When the first order reception data acquired from the order reception system 2 includes timing information indicating a future reservation time as the provision timing of the product, the order management server 1 sends to the shop system 3 a notice of the reservation prior to the transmission of the second order reception data so as to notify the shop that a reservation order has been received. Thus, the shop becomes aware that an order that requires preparation in the future has been received, before the timing at which the preparation is to be started.

Furthermore, the order management server 1 converts the first order reception data, which is transmitted from multiple order reception systems 2 in individual formats, into the second order reception data in a common format, and transmits the second order reception data to the shop system 3. The shop system 3 therefore can process the orders received by the individual order reception systems 2, without considering which order reception system 2 has received the orders.

In addition, the shop system 3 manages whether or not a settlement for an order received by the order reception proxy service has been made in the order reception system 2. For the delivery of a product relating to an order received by the order reception proxy service, the shop system 3 executes the settlement processing. Thus, even if the order reception proxy services vary in settlement handling, the necessary settlement can be appropriately made.

In the shop system 3, the shop station 31 uniformly manages order management items of data DAB of the same type when receiving the second order reception data relating to orders received by the order reception system 2 and when receiving order data relating to orders received by the shop system 3. Thus, even if the settlement for an order received by the order reception proxy service needs to be made at the order reception system 2, the settlement can be processed in the same manner as the settlement for an order received by the shop system 3. It is therefore unnecessary to input anew the descriptions of the order to the POS terminal 35 for settlement for the order received at the order reception proxy service.

The present embodiment can be modified as indicated below.

Some or all of the functions implemented by the processors 11, 211, and 311 through information processing may be realized by hardware configured to execute information processing that is not based on a program, such as a logic circuit. Each of the above-described functions can also be realized by combining software control with hardware such as a logic circuit.

The program according to the present embodiment may be provided as being stored in an electronic device, or may be provided as not being stored in an electronic device. For the latter case, the program may be provided via a network, or may be provided as being stored in a storage medium. The storage medium is a non-transitory tangible medium. The storage medium is a computer-readable medium. The storage medium may be any medium that can store a program and can be read by a computer, such as a CD-ROM or a memory card, and the form thereof is not limited.

While certain embodiments have been described, these embodiments have been presented by way of example only, and are not intended to limit the scope of the inventions. Indeed, the novel embodiments described herein may be embodied in a variety of other forms; furthermore, various omissions, substitutions and modifications in the form of the embodiments described herein may be made without departing from the spirit of the inventions. The accompanying claims and their equivalents are intended to cover such forms or modifications as would fall within the scope and spirit of the inventions.

## Claims

1. An order management apparatus included, together with a shop system provided in a shop, in an order processing system for processing an order received relating to product provision at the shop by an order reception system configured to receive an order for product provision at the shop, the order management apparatus comprising:
an acquisition unit configured to acquire, from the order reception system, first order reception data including a plurality of items of data relating to the order for the product;
an extraction unit configured to extract a data element relating to a predetermined item from data elements included in the first order reception data acquired by the acquisition unit;
a generation unit configured to generate second order reception data including the data element extracted by the extraction unit; and
a transmission unit configured to, if the first order reception data acquired by the acquisition unit includes timing information that designates a future time point as a provision timing of a product, wait until a time point determined according to the provision timing indicated by the timing information is reached, and to transmit the second order reception data generated by the generation unit to the shop system.

2. The order management apparatus according to claim 1, further comprising:
a notification unit configured to, if the first order reception data acquired by the acquisition unit sets the timing information designating the future time point as the product provision timing, notify the shop system of order reception with a notice of the provision timing before the transmission unit transmits the second order reception data.

3. The order management apparatus according to claim 1 or 2, wherein the acquisition unit acquires, from a plurality of order reception systems including the order reception system, first order reception data including a plurality of items of data in different product order formats.

4. A program storage medium storing an information processing program for a computer, wherein the computer is arranged in an order management apparatus that is included, together with a shop system provided in a shop, in an order processing system for processing an order received relating to product provision at the shop by an order reception system configured to receive an order for product provision at the shop, the information processing program configured to cause the computer to execute:
acquiring, from the order reception system, first order reception data including a plurality of items of data relating to the order for the product;
extracting a data element relating to a predetermined item from data elements included in the acquired first order reception data;
generating second order reception data including the extracted data element; and
if the acquired first order reception data includes timing information that designates a future time point as a provision timing of a product, waiting until a time point determined according to the provision timing indicated by the timing information, and transmitting the generated second order reception data to the shop system.

5. An order processing system comprising a shop system provided in a shop and an order management apparatus, the system comprising:
an acquisition unit arranged in the order management apparatus and configured to acquire first order reception data transmitted from an order reception system configured to receive an order for product provision at the shop;
an extraction unit arranged in the order management apparatus and configured to extract a data element relating to a predetermined item from data elements included in the first order reception data acquired by the acquisition unit;
a generation unit arranged in the order management apparatus and configured to generate second order reception data including the data element extracted by the extraction unit;
a transmission unit arranged in the order management apparatus and configured to, if the first order reception data acquired by the acquisition unit includes timing information designating a future time point as a provision timing of a product, wait until a time point determined according to the provision timing indicated by the timing information, and to transmit the second order reception data generated by the generation unit to the shop system; and
a reporting unit arranged in the shop system and configured to, when receiving the second order reception data transmitted by the transmission unit, report a worker of a start of a preparation job for provision of the product based on the second order reception data.
